# EUROPEAN PATENT APPLICATION

(11) **EP 1 873 616 A2**
(43) Date of publication of application: **02.01.2008**
(21) Application number: 06733238.7
(22) Date of filing: 13.03.2006
(51) Int. Cl.: G06F 3/00, G06K 9/62

(54) **COUNTERFEIT PROTECTING METHOD**

(30) Priority: 18.03.2005 RU 2005107647
(71) Applicant: Karimov, Maksim Remirovich, Moscow 119034 (RU); Gruzdev, Maksim Vladimirovich, Moscow 119296 (RU)
(72) Inventor: Karimov, Maksim Remirovich, Moscow 119034 (RU); Gruzdev, Maksim Vladimirovich, Moscow 119296 (RU)
(74) Representative: Fleuchaus, Michael A.
(86) International application number: PCT/RU2006/000110
(87) International publication number: WO 2006/098659

(57) **Abstract**

The invention relates to methods for protecting products against counterfeiting, i.e. to methods for detecting a counterfeit, and can be used by producers for protecting products thereof and for protecting consumers from buying commodities produced by illegal producers. The inventive method consists in identifying the authenticity of article digitized identifier comprising randomly distributed and optically visible elements with the identifier digitized image recorded in a database. The use of said method makes it possible to increase the accuracy (reliability) of the comparison procedure, to reduce the number of said procedures, to simplify and ease the procedures carried out by a consumer, and to reduce a time for authenticating the articles by automating the comparison procedure.

## Description

A proposed invention is related to method for protection of goods from counterfeiting, i.e., to a method for detecting a counterfeit, and can be used by manufacturers for protection of their products and for protecting consumers from buying goods produced by illegal manufacturers.

A method for protection of valuable paper documents from counterfeiting is known. This method employs special marks corresponding to a special identification code located in a special area of the paper document. A microstructure of the special area of the paper document is electronically scanned and parameters of an identification vector corresponding to the microstructure of the area are formed. The vector is converted into protective code by an algorithm. The value of the protective code matches the value of the special mark (see patent RU 2088971 C1 MPK 7 G07D 7/00 issued 8/27/1997).

This known method increases effectiveness of protection of a valuable paper document from counterfeiting and reduces the cost of such protection. However, the known method is based on employing a cryptographic algorithm, which makes it complicated and difficult to use. Thus, use of this method for protection of goods form counterfeit is limited.

The most closely related the proposed invention method is a method for protection of goods from counterfeit by detection of the counterfeit goods. The authenticity of goods is determined by comparison of a physical identification affixed to a product with its image. The physical identification contains optically detectable elements arranged in a random fashion. The optically detectable elements are natural properties of some materials having optical patterns. The physical patterns are compared with an analog image of the identification (see patent RU 2202127 C1, MPK 7 G07D 7/20 issued on 4/10/2003).

This known method has the following shortfalls:
- low accuracy (reliability) of the results of comparison procedure, due to the fact that a user has to visually compare two complex optical objects - identification and its image;
- complexity, difficulty, large number of procedures that need to be performed by a user, as well as a length of time needed for determination of authenticity of the goods. The user has to determine the number of the identifier, send the identifier's number to the manufacturer, receive the image, visually compare two complex optical objects (the identifier and the image), analyze the results and make a decision regarding the degree of identity.
- inability to simplify the process and reduce the number of procedures the user is required to perform. Also, an inability to reduce the time needed for determining the authenticity of a product by process automation due to the fact that certain procedures cannot be automated. For example, a user still has to determine the number of the identifier, to send this number to the manufacturer and to receive the image. Furthermore, the user has to perform procedures related to digitizing the identifier and employ some software means for comparison.

The technical task, to which the current invention is directed, is reliable and convenient method for a user for determining authenticity of a product, i.e., the method for protection against counterfeiting.

This task is accomplished by determining authenticity of a product by comparison of digital image of the identifier affixed to the product in a form of a multi-dimensional physical object containing randomly arranged optically visible elements with a digital image sample of the identifier stored in a database.

In another variation of the invention, each identifier has its own identification, for example, registration number that helps to determine which digital image sample out of a plurality of digital samples stored in the database needs to be compared with the digital image of the identifier being examined.

Product authenticity determination is accomplished through a participation of a special third party, which receives the documents from the manufacturer, confirms its right to use the trademark and examines the reliability of the information provided to the users.

The multi-dimensional physical object that serves as identifier can be made out of transparent or partially transparent material with randomly arranged non-transparent elements. Any regular visible particles can be used as non-transparent elements. The visible particles can be of a random shape, be of different colors and have a different optical density. The visible particles can be statically located within the transparent multi-dimensional object or can be dynamically randomly located (i.e., can change their positions) within the transparent multi-dimensional object.

Visible elements can be particles of the material, which has optical properties different from the optical property of the substrate of the multi-dimensional object, such as, for example, randomly dispersed drops of the different color substrate.

The identifier can be produced in a form of a part of a label affixed on the product or can be a part of the product itself or a part of the packaging. The identifier is affixed to the product in such a way that it can not be affixed to another product without disturbing the integrity of the identifier and/or integrity of the product itself.

The identifier has at least one visual property that provides its similarity to other identifiers that can be visually apparent when comparing identifiers with a naked eye. The identifier can be produced by chipping the hard non-transparent substance into randomly shaped visible particles and adding these particles into liquid transparent or partially transparent substance. Then the produced liquid substance with particles is filled into a transparent container, where it hardens. Therefore, the multi-dimensional hard identifier is produced by mixing the visible particles into transparent or partially transparent material.

The digitized image of the identifier for comparison with the image sample stored in the database is sent over communication channels into the software application which performs the digital comparison. Generation and transfer of the digital image of the identifier can be performed by a device that has a functionality for image generation and data transfer, such as, for example a cellular phone with a digital camera.

Usage of the invention allows achieving the following technical results:
- increase in accuracy (reliability) of the results of comparison procedure;
- decrease in a number and a complexity of the procedures performed by a user;
- ability to decrease the length of time needed for product authenticity determination by automation of the comparison procedure.

The proposed method for protection of goods and products against counterfeiting consist of:
- providing the identifier (i.e. protective element, unique label or mark) for a product containing randomly arranged optically visible elements;
- generating a digital image of the identifier (original code value);
- placing the image of the identifier into a database;
- determining authenticity of the product by generating the digital image of the identifier affixed to the product being authenticated and comparing the code value generated from the digital image of the identifier with the original code value stored in the data base. If the code values match, the product is authentic, if they do not match, the counterfeit product is detected.

The main difference between the proposed method and the known methods described in the above mentioned patents as well as other known methods is direct comparison of the original digital image stored in the database with the secondary digital image generated by the user. This difference allows overcoming the shortcomings of the known methods discussed above and also allows achieving the unexpected technical outcome not defined by influences of known inventions and not predictable by the common knowledge and the state of the art.

The unexpected technical results from realization of the proposed method as well as the need for this method, providing a very high level of protection of goods in combination with reliability and convenience for users proves this method do be very advantageous over the known methods. None of the known methods taken individually or in combination with other methods do not allow to realize such protection that potential costs of production of a counterfeit identifier is much higher that the cost of production of the original identifier. Furthermore, the manufacturer conducts a complex and highly precise technical examination of authenticity of its own product, while a consumer is informed right at the point of sale. The consumer does not need to use special equipment of any kind. All he does is perform two very simple operations - takes a picture and sends an MMS message using his cellular phone. The time needed for determining the authenticity of a product takes no longer than a few seconds.

### Brief description of the drawings

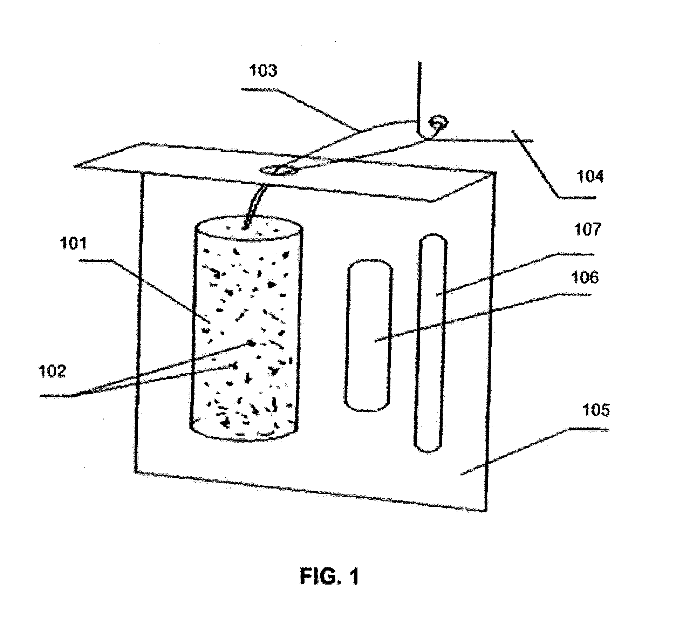

Fig. 1 depicts an example of identifier attached to the product along with the label.

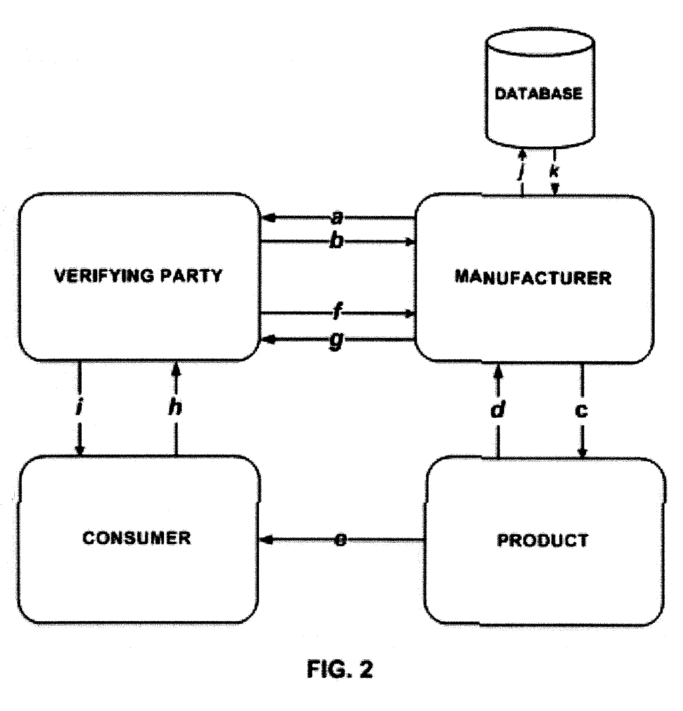

Fig. 2 depicts a functional scheme of method for protection of goods against counterfeit. Identifier (1) comprises multi-dimensional object made out of a transparent material, such as, for example regular or plastic glass, that has a transparent hardened filler substance inside. The transparent filler substance has randomly placed hard particles (2) inside. The identifier (1) is attached to the product (4) by the thread (3) along with the label (5). The label (5) has the registration number (6) of the identifier and the address (7) for sending the image written on it.

A verifying third party organization receives from the manufacturer documents (a) which confirm its right to use the trademark and passes on to the manufacturer identifier registration number (b). The manufacturer produces and attaches (c) identifier to the product along with the label, which has identifier registration number written on it. The manufacturer receives a digital image of the identifier and stores it in the database along with its registration number and description of the product. A consumer using his mobile phone with a digital camera produces (d) the digital image of the attached identifier and its registration number. Then the consumer sends (e) the digital image to the third party verifying organization, which identifies the identifier registered number on the image and sends (f) the image produced by consumer to the manufacturer, who finds the image of the identifier in the data base and compares it with the image produced by the consumer. Then the manufacturer sends the results of comparison to the verifying organization, which in turn passes (g) on to the consumer either the confirmation of authenticity or warning about the counterfeit product.

Example of implementation of the invention.
1. The identifier is produces and attached to the product along with the label. For this purpose the following is done:
   - letting the manufacturer know the registration number of the identifier (the documents confirming the manufacturer's right to use the trademark),
   - applying the registration number of the identifier onto the label,
   - producing in the special apparatus the small chips or particles of needed size from a piece of a hard non-transparent material (for example granite),
   - adding the produced visible particles into transparent glue in a liquid form,
   - passing a thin thread through a functional hole or specially made holes in the product and in the label,
   - placing the ends of the thread into a glass container of a desired shape,
   - filling the glass container with the mixture of the transparent glue and the visible particles and waiting for it to harden.
2. The digital image of the identifier is produces and stored into the database along with the identifier registration number and the description of the product.
3. Check the authenticity of the product by:
   - using a mobile phone with integrated digital camera generating a digital image of the identifier and the label attached to the product;
   - sending the digital image to a phone number or an email address indicated on the label (the phone number or email address used are the same for all of the manufacturers);
   - identifying on the received image the registration number of the identifier and passing it for comparison to the manufacturer who had received this registration number;
   - using received registration number of the identifier find its corresponding digital image in the data base;
   - comparing the digital image found in the data base with the received digital image;
   - sending to the consumer confirmation of product authenticity, including product description and confirmation of manufacturer's right to use a trademark (in case of matching of images) or warning the consumer of counterfeit product.

## Claims

1. Method for protection of products against counterfeiting, in which authenticity of the product is determined by comparison of a digital image of an identifier, affixed to the product in a form of multi-dimensional physical object, which contains randomly placed optically visible elements, with a digital image of the identifier stored in a database.

2. Method as in 1, wherein each identifier has its own property, such as, for example, registration number, which helps to determine which digital image out of plurality of digital images stored in the database needs to be compared with the digital image of the identifier being examined.

3. Method as in 1, wherein determination of product authenticity is accomplished with participation of a special third party, which verifies the manufacturer's rights and confirms the information provided to a consumer.

4. Method as in 1, wherein the multi-dimensional physical object is made out of a transparent or a partially transparent material.

5. Method as in 1, wherein visible particles serve as visible elements.

6. Method as in 5, wherein shape of visible particles is random.

7. Method as in 5, wherein the visible particles are of different colors.

8. Method as in 5, wherein the visible particles have different optical density.

9. Method as in 5, wherein the visible particles are statically located in random fashion within the multi-dimensional physical object.

10. Method as in 5, wherein the visible particles are dynamically located in random fashion within the multi-dimensional physical object.

11. Method as in 1, wherein the visible elements are the elements of a substance that has different optical properties than the material of the multi-dimensional physical object, for example, randomly dispersed within the physical object drops of a substance of a different color.

12. Method as in 1, wherein the identifier is implemented as a part of the label attached to the product or as a part of the packaging.

13. Method as in 1, wherein the identifier is implemented as a part of the product.

14. Method as in 1, wherein the identifier is attached to the product in such a way that it cannot be removed and attached to another product without disturbing the integrity of the identifier and/or product and/or binding of the identifier.

15. Method as in 1, wherein the identifier has at least one property providing it similarity with other identifiers detectible by comparison with a naked eye.
